(19) Europäisches Patentamt

European Patent Office

Office européen des brevets

(11) Numéro de publication: **0 193 924 B1**

(12) **FASCICULE DE BREVET EUROPEEN**

(45) Date de publication de fascicule du brevet: **12.05.93** (51) Int. Cl.5: **G01N 29/04**

(21) Numéro de dépôt: **86102799.3**

(22) Date de dépôt: **04.03.86**

(54) **Dispositif de contrôle des défauts de frettes de rotors de machines électriques.**

(30) Priorité: **06.03.85 FR 8503302**

(43) Date de publication de la demande:
**10.09.86 Bulletin 86/37**

(45) Mention de la délivrance du brevet:
**12.05.93 Bulletin 93/19**

(84) Etats contractants désignés:
**AT BE CH DE FR GB IT LI LU NL SE**

(56) Documents cités:
**FR-A- 2 373 058**
**GB-A- 2 053 474**
**US-A- 4 502 331**

**PATENT ABSTRACTS OF JAPAN, vol. 8, no.**
**237 (P-310)[1674], 3 octobre 1984;& JP-**
**A-59 112 258**

(73) Titulaire: **GEC ALSTHOM SA**
**38, avenue Kléber**
**F-75116 Paris(FR)**

(72) Inventeur: **Besanceney, Michel**
**Plancher-Bas Centre**
**F-70290 Champagney(FR)**

(74) Mandataire: **Weinmiller, Jürgen et al**
**Lennéstrasse 9 Postfach 24**
**W-8133 Feldafing (DE)**

## Description

La présente invention concerne un dispositif de contrôle par ultra-sons des défauts de frettes de rotors de machines électriques, comprenant un chariot automoteur mobile autour de l'arbre du rotor, un bras porte-palpeurs porté par ce chariot et susceptible de déplacements longitudinaux parallèles à l'axe du rotor entre le stator et la frette du rotor portant à son extrémité deux boîtiers de détection comportant chacun un palpeur droit à ondes longitudinales et un palpeur incliné obliquement à ondes transversales, chacun de ces derniers étant d'inclinaison symétrique par rapport aux rayons du rotor et jouant simultanément les rôles d'émetteur et de récepteur.

Le contrôle des défauts des frettes de rotors de machines électriques, notamment d'alternateurs, implique actuellement en général l'extraction du rotor de son stator, puis un examen en général visuel.

On connaît certes des dispositifs de contrôle de défauts de pièces métallurgiques par réflexion de faisceaux d'ultra-sons et enregistrement de l'amplitude du signal reçu. On pourrait donc envisager d'effectuer un contrôle sans extraction du rotor de son stator, à l'aide d'un chariot mobile supportant un bras porteur de palpeurs, comme défini ci-dessus. On se heurtait cependant à des difficultés dûes notamment aux faits que les échos dûs à des défauts de la frette peuvent être plus forts ou plus faibles que les échos de forme dûs aux dents du rotor, et que des défauts de dimension identique donnent lieu à des échos d'amplitude différente suivant que le défaut se trouve en zone frettée (sur une dent du rotor) ou non frettée (entre deux dents ou en dehors de la zone de frettage). Un enregistrement par détection ultrasonique sans discrimination entre les signaux nécessiterait un dépouillement complexe, avec identification des échos de forme et recherche des échos anormaux pouvant correspondre à des défauts, long et fastidieux, pouvant entraîner des erreurs et nécessitant des longueurs de support d'enregistrement prohibitives.

La présente invention a donc pour but de procurer un dispositif de contrôle des défauts de frettes de rotors de machines électriques sans démontage du rotor, qui permette une discrimination facile entre les échos de forme et de défauts du rotor, qui assure une sensibilité de détection suffisante quelle que soit la localisation du défaut, et qui permette une détermination rapide et précise des défauts à la lecture des enregistrements, en minimisant les risques d'erreur.

Le dispositif selon l'invention est caractérisé en ce qu'il comporte

— des moyens d'enregistrement des échos des palpeurs droits définissant la qualité du couplage acoustique, l'épaisseur de la frette, la situation du point examiné en zone frettée ou non frettée et ses positions angulaire et linéaire,

— des moyens d'enregistrement des échos des palpeurs inclinés obliquement à l'intérieur d'un intervalle de temps centré sur le temps de parcours correspondant à la zone examinée,

— et des moyens de contrôle définissant pour les palpeurs inclinés obliquement à partir des indications des palpeurs droits un seuil de détection de hauteur variable suivant que le point examiné se trouve en zone frettée ou non frettée.

Il répond en outre de préférence à au moins l'une des caractéristiques suivantes :

— Les moyens d'enregistrement des échos des palpeurs inclinés obliquement sont munis chacun d'un amplificateur à deux gains différents.

— Les déplacements du chariot automoteur et du bras porte-palpeurs sont commandés par un calculateur muni d'instructions sur les intervalles unitaires angulaire et longitudinal d'enregistrement, de choix de l'intervalle de temps d'enregistrement des palpeurs en fonction de l'épaisseur de la frette, et de lecture des coordonnées angulaire et longitudinale.

— Le calculateur est muni d'une instruction de détermination de la moyenne des amplitudes des signaux reçus par chacun des palpeurs inclinés obliquement et d'enregistrement de cette seule moyenne.

Il est décrit ci-après, à titre d'exemple et en référence aux figures du dessin annexé, le principe du fonctionnement d'un dispositif selon l'invention pour le contrôle des défauts de frettes du rotor d'un turbo-alternateur de grande puissance.

La figure 1 représente schématiquement l'ensemble de deux boîtiers de détection et le trajet des faisceaux ultrasoniques.

La figure 2 représente une fraction du rotor et les divers points possibles de localisation d'un défaut.

La figure 3 représente un élément d'échogramme des signaux d'un palpeur droit.

La figure 4 représente un élément d'échogramme des signaux d'un palpeur oblique.

La figure 5 représente un élément d'échogramme des signaux moyennés de deux palpeurs obliques.

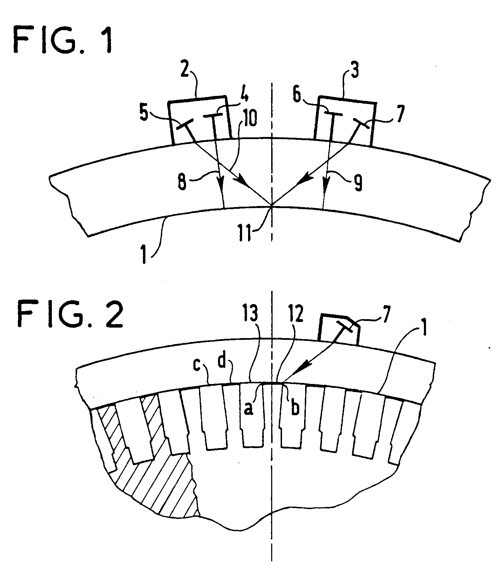

Dans la figure 1, on voit en face de la frette 1 les deux boîtiers de détection 2, 3 d'un bras porte-palpeurs fixé sur un plateau intermédiaire d'un chariot automoteur, ces deux derniers non représentés. Le boîtier 2 comporte le palpeur droit 4, émetteur d'ondes longitudinales, et le palpeur oblique ou palpeur d'angle 5, émetteur d'ondes transversales. De même, le boîtier 3 comporte le palpeur droit 6 et le palpeur d'angle 7. Les palpeurs droits émettent des faisceaux ultra − sonores 8, 9 à ondes longitudinales qui se réfléchissent sur la paroi interne de la frette du rotor. Les palpeurs d'angle émettent des faisceaux à ondes transversales qui suivent le trajet 10 à travers la frette. Les rayonnements émis par les palpeurs 5 et 7 convergent sur la face interne de la frette en 11. De la manière habituelle, il est injecté un liquide de couplage à l'interface entre la frette et les palpeurs, et celui − ci est récupéré par aspiration.

La figure 2 représente la structure générale du pourtour du rotor, comprenant des dents 12 et des intervalles entre dents 13.

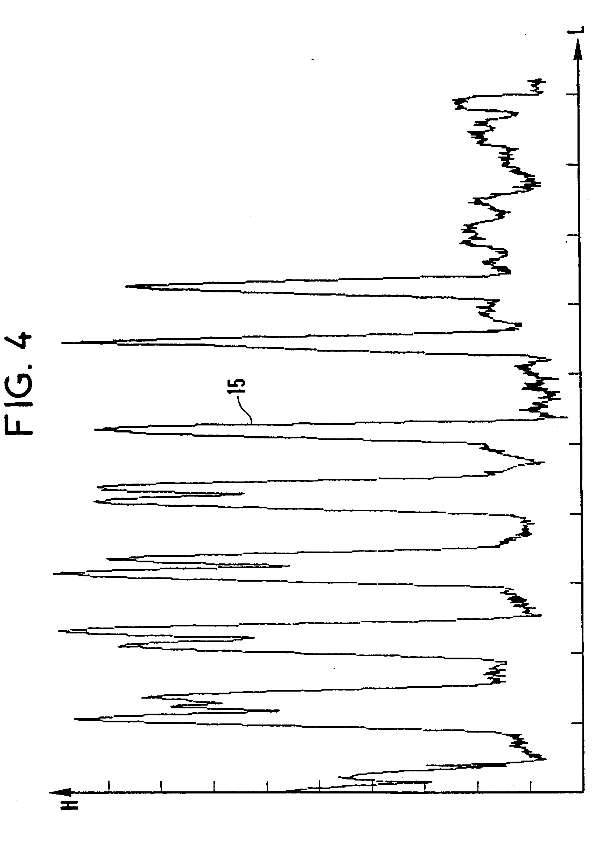

Lorsque le bras porte − palpeurs tourne autour de la frette 1 le faisceau d'ondes ultra − sonores d'un palpeur d'angle se réfléchit successivement sur le bord d'entrée d'une dent du rotor (point a), sur une dent (point tel que d), puis sur le bord de sortie (point b) et entre deux dents (point c), et ainsi de suite. Ces réflexions successives donnent lieu chacune à un écho qui apparait sur l'écho − gramme sous forme d'un pic tel que 15 (fig.4). Suivant la taille et la position d'un défaut éventuel, qui peut se situer indifféremment en a, b, c ou d, l'écho provoqué par ce défaut peut être plus fort ou plus faible que les échos dûs aux dents du rotor (échos de forme) ou même se confondre avec l'un de ces échos. De plus, deux défauts de dimension identique donneront lieu à des échos d'amplitude différentes suivant qu'ils sont situés en un point tel que c (entre deux dents) ou d (sur une dent). Dans le premier cas, toute l'énergie ultra − sonore reste dans la frette et sera donc réfléchie par le défaut. Dans le second cas, une grande partie de l'énergie ultra − sonore traverse l'interface frettée et se perd dans la dent ; le défaut ne réfléchira qu'une fraction de l'énergie incidente.

Le traitement des signaux est le suivant.

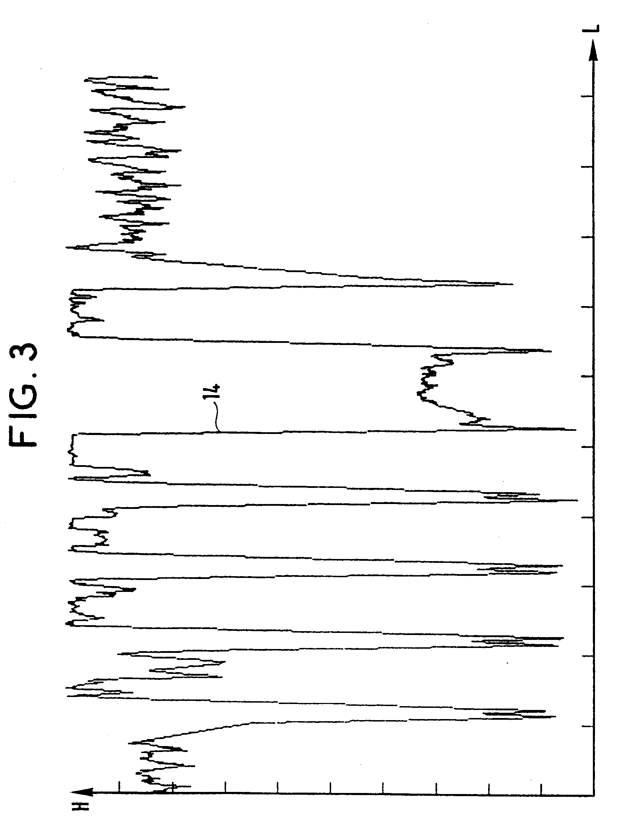

Provenant de chacun des palpeurs droits à ondes longitudinales, on recueille les signaux correspondant à l'amplitude de l'écho et au temps de parcours du faisceau ultra − sonore dans la frette (figure 3). Ces signaux donnent un échogramme d'abscisses L et d'ordonnées H, comportant des pics 14.
Ces quatre signaux définissent :
 − la qualité du couplage acoustique
 − l'épaisseur de la frette
 − la situation du palpeur en zone frettée ou non frettée

Provenant de chacun des palpeurs d'angle à ondes transversales, on recueille également les signaux correspondant à l' amplitude de l'écho et au temps de parcours du faisceau ultra − sonore dans la frette. Ces signaux sont acquis deux fois en utilisant deux valeurs de gain différentes sur l'appareil à ultra − sons, de façon à augmenter ar − tificiellement la dynamique de cet appareil et à s'affranchir plus facilement du bruit de fond.

Les signaux d'amplitude des échos sont re − cueillis à l'intérieur d'une "porte" centrée sur le temps de parcours correspondant à la zone d'examen. La largeur de cette porte est déterminée en fonction de la résolution souhaitée et de l'infor − mation recherchée.

Au début de l'enregistrement, on positionne un palpeur à ondes longitudinales sur une zone non frettée et le calculateur lit le temps de parcours OL.

On positionne manuellement la porte d'obser − vation et le calculateur lit le temps de parcours OT du palpeur à ondes transversales.

Le rapport de ces 2 temps de parcours $\frac{OL}{OT}$ est un rapport d'homothétie qui permet de positionner la porte correctement en fonction des variations d'épaisseur de la frette.

Les signaux des quatre palpeurs, décalés géométriquement, sont recadrés dans l'axe du bras porte − palpeurs.

L'énergie ultra − sonore réfléchie par un défaut, donc l'amplitude de l'écho qu'il provoque, étant différente suivant que l'on se trouve en zone frettée (sur une dent) ou en zone non frettée (entre deux dents ou en dehors de la zone de frettage), l'in − formation d'amplitude fournie par les palpeurs à ondes longitudinales sert à définir un seuil de hauteur variable suivant que l'on se trouve en zone frettée ou non, de façon à conserver une sensibilité de détection sensiblement constante vis − à − vis des défauts.

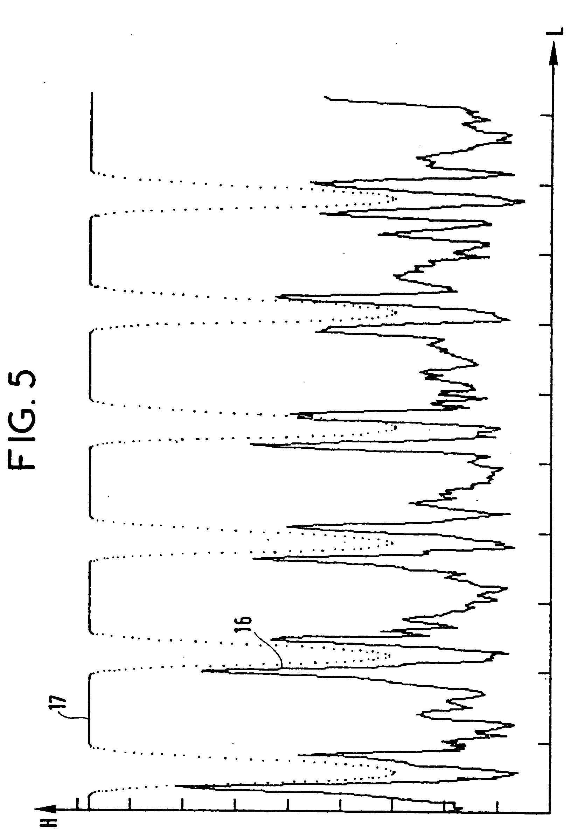

L' échogramme à abscisses L et ordonnées H des palpeurs à ondes transversales (figure 4) contient les échos de forme (pics 15) et les échos de défauts éventuels. Après avoir effectué une moyenne de ces signaux, on obtient un écho − gramme à pics 16. Tout dépassement du seuil variable 17 (figure 5) correspond à une anomalie, donc à une présomption de défaut.

L'acquisition des données a lieu par exemple toutes les 20 millisecondes ce qui correspond à une longueur de circonférence de 0,5 mm pour une vitesse d'examen de 25 mm/sec.

L'acquisition dure 600 μs, ce qui laisse un peu plus de 19 millisecondes pour effectuer le traite − ment des informations en temps réel.

La sauvegarde des informations, après traite − ment, peut être effectuée sur bande magnétique sous forme numérisée. On ne conserve alors qu'une seule valeur de gain pour les signaux des palpeurs à ondes transversales.

L'enregistrement des résultats se fait sous forme graphique, soit sur écran de visualisation, soit sur papier par retranscription automatique. Chaque module de représentation graphique correspond par exemple à 250 mm de longueur circonférentielle sur la totalité de la longueur de la frette.

Le calculateur contrôle les déplacements du bras porte‑palpeurs et du chariot et en transmet les ordres à la boîte de commande; Ses fonctions programmées sont les suivantes :

- Commande marche‑arrêt.
- Définition de l'angle (en longueur circonférentielle) à balayer (axe X + et − ).
- Définition de l'incrément longitudinal (axe Y + et − ).
- Lecture des valeurs X et Y.
- Arrêt sur défaut de couplage acoustique.
- Retour de la mécanisation en un point de coordonnées x, y.

## Revendications

1. Dispositif de contrôle par ultra‑sons des défauts de frettes de rotors de machines électriques, comprenant un chariot automoteur mobile autour de l'arbre du rotor, un bras porte‑palpeurs porté par ce chariot et susceptible de déplacements longitudinaux parallèles à l'axe de l'entrefer entre le stator et la frette (1) du rotor, portant à son extrémité deux boîtiers (2, 3) de détection comportant chacun un palpeur droit à ondes longitudinales (4, 6) et un palpeur incliné obliquement à ondes transversales (5, 7), chacun de ces derniers (5,7) étant d'inclinaison symétrique par rapport aux rayons du rotor et jouant les rôles d'émetteur et de récepteur,
caractérisé en ce qu'il comporte des moyens d'enregistrement des échos des palpeurs droits (4,6) définissant la qualité du couplage acoustique, l'épaisseur de la frette (1), et la situation du point examiné en zone frettée ou non frettée,
des moyens d'enregistrement des échos des palpeurs inclinés obliquement (5,7) à l'intérieur d'un intervalle de temps centré sur le temps de parcours correspondant à la zone examinée,
et des moyens de contrôle définissant pour les palpeurs inclinés obliquement (5,7) à partir des indications des palpeurs droits (4,6) un seuil de détection (17) de hauteur variable suivant que le point examiné se trouve en zone frettée ou non frettée.

2. Dispositif selon la revendication 1, caractérisé en ce que les moyens d'enregistrement des échos des palpeurs inclinés obliquement (5,7) sont munis chacun d'un amplificateur à deux gains différents.

3. Dispositif selon les revendications 1 ou 2, caractérisé en ce que les déplacements du chariot automoteur et du bras porte‑palpeurs sont commandés par un calculateur muni d'instructions sur les intervalles unitaires angulaire et longitudinal d'enregistrement, de choix de l'intervalle de temps d'enregistrement des palpeurs (4,6) en fonction de l'épaisseur de la frette (1), et de lecture des coordonnées angulaire et longitudinale.

4. Dispositif selon la revendication 3, caractérisé en ce que le calculateur est muni d'une instruction de détermination de la moyenne des amplitudes des signaux reçus par chacun des palpeurs inclinés obliquement (5,7) et d'enregistrement de cette seule moyenne.

## Claims

1. A device for inspecting electrical machine rotor bindings for defects by ultrason, comprising a self‑powered carriage movable about the rotor shaft, and a probe‑carrying arm carried by said carriage and operable to move longitudinally parallel to the axis of the gap between the stator and the rotor binding (1), said arm carrying at its extremity two detector units (2, 3) each comprising a right angle, longitudinal wave probe (4, 6) and an oblique angle, transverse wave probe (5, 7), each of the latter (5, 7) being symmetrically inclined with respect to the radii of the rotor and acting both as transmitter and receiver, characterized in that it comprises:
- means for recording the echos from the right angle probes (4, 6) defining the strength of the acoustic coupling, the thickness of the binding band (1) and the location − in or outside the binding zone − of the inspection point,
- means for recording the echoes from the oblique‑angled probes (5, 7) within a time interval centered on the travel time corresponding to the inspected zone,
- and means of control defining for the oblique‑angled probes (5, 7), on the basis of the indications from the right angle probes (4, 6), a detection threshold (17) varying in height according to whether the inspection point is located in a bound zone or an unbound zone.

**2.** An inspection device according to claim 1, characterized in that said means for recording the echoes associated with the oblique – an – gled probes (5, 7) are each provided with an amplifier having two different gains.

**3.** An inspection device according to claim 1 or 2, characterized in that the movements of the self – powered carriage and of the probe – carrying arm are controlled by a computer supplied with instructions regarding the angular and longitudinal recording interval units, the choice of the recording item span for the probes (4, 6) according to the thickness of the binding band (1) and the reading of the angular and longitudinal coordinates.

**4.** A device according to claim 3, characterized in that said computer is programmed to deter – mine the average of the amplitudes of the signals received by each of the oblique angled probes (5, 7) and to record said average value alone.

**Patentansprüche**

**1.** Vorrichtung zur Ultraschall – Kontrolle der Fehler von Spannringen an Rotoren elektri – scher Maschinen, mit einem selbstfahrenden Wagen, der um die Rotorachse beweglich ist, einem Meßkopfträgerarm, der auf dem Wagen angeordnet ist und Längsverschiebungen pa – rallel zur Achse des Luftspalts zwischen Stator und dem Spannring (1) des Rotors durchfüh – ren kann und an seinem Ende zwei Detektor – gehäuse (2, 3) mit je einem geraden Meßkopf für Längswellen (4, 6) und einem geneigten Meßkopf für Transversalwellen (5, 7), wobei die beiden geneigten Meßköpfe (5, 7) symme – trisch bezüglich von Radien des Rotors liegen und als Sender und Empfänger wirken, da – durch gekennzeichnet, daß die Vorrichtung aufweist
 – Mittel zur Registrierung der Echos der geraden Meßköpfe (4, 6), die die Qualität der akustischen Kopplung, die Dicke des Spannrings (1) und die Lage des unter – suchten Punkts in einer verspannten Zone oder außerhalb davon definieren,
 – Mittel zur Registrierung der Echos der geneigten Meßköpfe (5, 7) innerhalb ei – nes Zeitintervalls, das auf die Zeit des Durchlaufs entsprechend der untersuch – ten Zone zentriert ist,
 – und Kontrollmittel, die für die geneigten Meßköpfe (5, 7) ausgehend von Anga – ben, die von den geraden Meßköpfe (4, 6) stammen, eine Detektorschwelle (17) variabler Höhe definieren, je nachdem, ob der untersuchten Punkt sich in einer verspannten Zone oder nicht befindet.

**2.** Vorrichtung nach Anspruch 1, dadurch ge – kennzeichnet, daß die Registriermittel für die Echosignale der geneigten Meßköpfe (5, 7) je einen Verstärker mit zwei unterschiedlichen Verstärkungsgraden besitzen.

**3.** Vorrichtung nach Anspruch 1 oder 2, dadurch gekennzeichnet, daß die Verschiebungen des selbstfahrenden Wagens und des die Meß – köpfe tragenden Arms von einem Rechner gesteuert werden, der Befehle über die Ein – heitsintervalle der Winkel – und Längsver – schiebung der Registrierung, über die Wahl des Zeitintervalls der Registrierung der Meß – köpfe (4, 6) abhängig von der Dicke des Spannrings (1) und über das Auslesen der Koordinaten in Winkel – und Längsrichtung besitzt.

**4.** Vorrichtung nach Anspruch 3, dadurch ge – kennzeichnet, daß der Rechner Befehle zur Bestimmung des Mittelwerts der Amplituden der von jedem der geneigten Meßköpfe (5, 7) empfangenen Signale und zur Speicherung nur dieses Mittelwerts besitzt.

# FIG. 1

# FIG. 2

# FIG. 3

# FIG. 4

EP 0 193 924 B1

# FIG. 5

EP 0 193 924 B1